# EUROPEAN PATENT SPECIFICATION

(11) **EP 3 165 986 B1**
(45) Date of publication and mention of the grant of the patent: **23.02.2022**
(21) Application number: 16196606.4
(22) Date of filing: 31.10.2016
(51) Int. Cl.: G05D 16/06

(54) **VALVE WITH DETACHABLE REGULATION UNIT**
VENTIL MIT ABNEHMBARER REGELEINHEIT
SOUPAPE AVEC UNITÉ DE RÉGULATION DÉTACHABLE

(30) Priority: 05.11.2015 DK 201500681
(43) Date of publication of application: 10.05.2017
(73) Proprietor: Danfoss A/S, 6430 Nordborg (DK)
(72) Inventor: GJEREK, Bojan, 1241 Kamnik (SI); GUSTINCIC, Matjaz, 6230 Postojna (SI)

(56) References cited:
- EP-A1- 2 848 846
- DE-C1- 4 131 709

## Description

A valve a valve part comprising and a regulation part, where the valve part comprises a valve housing with a flow communication from a fluid inlet to a flow outlet and a valve seat positioned within said flow communication, a valve cone adapted to change position to change the valve opening defined as the opening between the valve seat and valve cone, a membrane adapted to deflect under the influence of a differential pressure across said membrane and means to communicate pressures to the opposing sides of the membrane. The regulation part comprises a biasing member and setting housing, where the valve part and regulation part is sealed from each other, where the regulation part is attachable and detachable to said valve housing where it maintains all settings when detached.

### BACKGROUND

It is well known to introduce pressure balancing valves into flow systems with variable flows pressure fluctuations, such as within the field of district heating or heating of domestic housings in general. A typical pressure balancing valve comprises a membrane deflecting according to a pressure difference over it and by this deflection regulates the orifice through a valve seat by changing the position of a valve cone relative to a valve seat. The membrane typically is biased such as by a spring in a regulation part of the valve where the regulation part may comprise means that enables the biasing to be adjusted such as to adjust the pressure setpoint.

For some installations it has been found difficult to install the valve due to the substantially large height made of the valve part and regulation part as they may have to be installed through confined openings.

One prior publication, EP 2 848 846, disclose a flow control valve including a membrane for pressure regulation, and where a regulation part and a valve part are detachable from each other.

The object of the present invention is to introduce a pressure balancing valve as they are well known, where the biasing of the pressure balancing may be adjusted, but where the device are easy to install even when having to be installed through confined openings.

### SUMMARY OF THE INVENTION

The object is solved bv the features as given in the claims. These includes, to reduce the dimensions of the valve such as during mounting it is formed of two parts, a valve part and a regulation part. The valve part consists of valve elements like a valve housing with a flow communication from a fluid inlet to a flow outlet and a valve seat positioned within said flow communication, a valve cone adapted to change position to change the valve opening defined as the opening between the valve seat and valve cone, a membrane adapted to deflect under the influence of a differential pressure across said membrane and means to communicate pressures to the opposing sides of the membrane. The regulation part may comprise a biasing member and setting housing, where said regulation part is attached to said valve part during operation of the valve and comprises a spindle having a part within the regulation part and a part within the valve part and connected to said valve cone, where the valve part and the regulation part is sealed from each other at any times and is and detachable from each other such that the regulation part may be detached from the valve part e.g. during mounting of the valve and attached again making the valve ready for the ordinary pressure regulation operation. A compact valve is formed in two parts, a valve part and a regulation part, where the valve part comprises a valve housing with a flow communication from a fluid inlet to a flow outlet and a valve seat positioned within said flow communication, a valve cone adapted to change position to change the valve opening defined as the opening between the valve seat and valve cone, a membrane adapted to deflect under the influence of a differential pressure across said membrane and means to communicate pressures to the opposing sides of the membrane.

The regulation part comprises a biasing member and setting housing where the regulation part is attached to the valve part, a spindle having a part within the regulation part and a part within the valve part and connected to said valve cone, where a change of the biasing of said biasing member is transmitted by a first elevating element being translocated when moving said setting housing relative to said valve housing. In this manner a regulation part has a housing consisting of the setting housing being easily assessable for an operator to change the setting and making a housing having all setting and biasing means, such that the regulation part may be removed with the settings unchanged.

In an embodiment the settings of the regulation part are maintained when the valve part and the regulation part detached from each other and in an embodiment they are locked when disassembled, but unlocked for adjustment of the when reassembled having the regulation par reconnected to the valve part. This enables the regulation part can be disassembled from the valve part of some reason, and when assembled again for continued operation of the valve the settings will be unchanged.

The regulation part consists of spring housing and a setting housing, the setting changed by moving the setting housing relative to the spring housing, where the inhibition of the of their relative movement to each other form the maintenance of the setting when disassembled,
In an embodiment the spring housing and setting housing relative position are maintained during disassembly through a resilience or friction in moving the one relative to the other such that it takes a minimum force to move them relative to each other.

In an embodiment a blocking mechanism is positioned to prevent rotation of the spring housing relative to setting housing in a locking position and enabling rotation in an unlocking position.

In an embodiment the setting is done by the movement of the setting housing relative to the spring housing is a rotation translocating a spring elevator to change the biasing of biasing member by a winded interconnection of the spring elevator to the spring housing, thereby a compact design is formed with the spring elevator positioned within the regulation part translating the rotational movement to a changing biasing.

In an embodiment the valve further comprises a shut-off feature, where this may be materialized by equipping the regulation part with a shut-off knob is connected to the spring guide such that a rotation of the shut-off knob induces a translocation of the spring guide and thus the spindle is fixed to the spring guide and the valve cone connected to the spindle until it engages the valve seat to close off flow through the valve.

### FIGURES

- Fig. 1: A differential pressure valve formed a valve part and a regulation part where the two parts are sealed from each other and may be disassembled.
- Fig. 2: Detail of a differential pressure valve illustrating details in the setting mechanism.
- Fig. 3: A differential pressure valve having a visible setting scale.
- Fig. 4: A differential pressure valve illustrated having a regulation part being disassembled from the valve part.
- Fig. 5: A shut-off function of a differential pressure valve.
- Figs. 6A-C: A flushing function of a differential pressure valve.

### DETAILED DESCRIPTION OF THE INVENTION

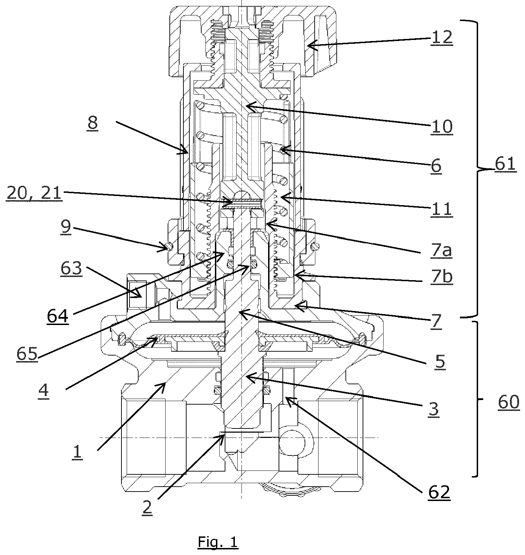

Fig. 1 shows a schematic cross section illustration of an embodiment of the valve of the present invention. The valve comprises a valve housing (1) forming a flow passage between an inlet and outlet. Within the flow passage is positioned a valve seat (2) cooperating with a valve cone (3) in a manner where the flow passage through the flow passage may be fully or partly blocked.

The valve cone (3) interacts with a membrane (4) such that a differential pressure across the membrane will deflect it. The valve cone (3) is attached to a spindle (5) being biased by any kind of element capable of biasing the membrane, in the following exemplified by a spring (6).

The embodiment disclose a device were a movement, such as a rotation, of a setting housing (8) relative to the valve housing (1) forces a change of the biasing, such as the tension, of the biasing member (6), e.g. a spring, and in an embodiment this movement can be blocked by a blocking mechanism such as to . In the illustrated embodiment this is realized by having a spring housing (7) being the fixed part to the valve housing (1), where the setting, the change of tension of the biasing member (6), is done by a movement, such as a rotation, of the setting housing (8) relative to the spring housing (7), and where a blocking mechanism may fix these relative to each other in a manner where the setting remains unchanged until releasing the blocking mechanism. A further feature according to the illustrated embodiment is a spring elevator (11) forming then transducer from the movement of the setting housing (9) to the change of biasing of the biasing member (6), such as, but not limited to, by winded interconnection.

In a more detailed description of the illustrated embodiment of example a part of the spring (6) is enclosed and in connection to a bottom position of a spring elevator (11). The spring elevator (11) further is positioned in connection to a spring housing (7), the spring housing (7) formed such that an outside spring housing part (7a) of it is encloses part of the spring elevator (11) and thus spring (6) and an inside spring housing part (7b) of are being enclosed by the spring elevator (11) and thus part of the spring (6). The spring elevator (11) and spring housing (7) are in the illustrated embodiment in a winded interconnection such that a rotation of the spring elevator (11) would translocate in and up and down direction relative to the spring to change its tension and this the biasing strength due to the connection at the bottom position. In the illustrated embodiment the winded interconnection is formed relative to the inside spring housing part (7a), but it might just as well have been to the outside spring housing part (7b).

An end-surface of the outside spring housing part (7b) abuts against an end surface of a setting housing (8) partly enclosing the spring (6), the inside spring housing part (7a) and the spring elevator (11). The setting housing (8) and the spring elevator (11) are interconnected in a manner where a rotation of the setting housing (8) induces a rotation of the spring (11) but leaves it free to translocate up and down, such as but not limited to cock wheel principle having protrusions of at respectively the inside and outside surfaces of the parts (8, 11) interconnecting each other, or protrusions of the one of the parts (8, 11) fitting within grooves of the other.

The spindle (5) reaches out of the valve housing (1) and into an inner bore of the inside spring housing part (7a) where it is fixed to the spring guide (10) in any manner where they may be attached and detached relative to each other, such as, but not limited to, through a pin (20) and groove (21) connection, as to be described in further details later.

An aspect of the valve according to one embodiment is to be seen at e.g. Fig. 1. The valve is seen to comprising a valve part (60) comprising the valve housing (1) and all the parts therein, like valve cone (3), membrane (4), spindle (5) etc., and a regulation part (61) formed of the spring housing (7), setting housing (8) and shut-off knob (12) and the means therein, such as the spring (6), spring guide (10), etc., but excluding the spindle (5).

The valve part (60) comprise parts getting in contact with the media of the system such as the fluid flowing from the inlet to the outlet, this being in contact to one side of the membrane (4) through an first pressure opening (62), and the media relevant for the pressure equalization being in contact to the second side of the membrane (4) through an second pressure opening (63).

The valve part (60) thus needs to be formed of materials sustainable to the conditions of the fluids and the pressures, and is therefore typically formed of metal.

The regulation part (61) is attached to the valve part (60) thus as to a tap extension (64) to the valve housing (1), but its internal is sealed from it, such as by an O-ring (65) formed within the tap extension (64). Hereby is achieved that the fluids does not get into contact with the regulation part (61) or its internal. This makes it possible to form some or each of the parts of the regulation part (61) of cheaper materials than the valve part (60) like plastics though these would not be suitable as valve part (60) materials.

The spindle (5) is positioned such that it has a part positioned within the spring housing (7) and setting housing (8) of the regulation part (61), and a part positioned within valve housing (1) of the valve part (60) where it is connected to the valve cone (3) as also described above, and thus preferably is made of a material sustainable to the fluids too.

In addition to the option of forming the regulation part (61) cheap and less sustainable materials due to it being totally sealed from all the fluids within the valve part (60), it also enables the possibility for the regulation part (61) to be dis-connectable relative to the valve part (60), even when this is connected to the flow system, and to maintain the settings for when it is re-attached, or in other words, when the valve are re-assembled by connecting the regulation part (61) back to the valve part (61),

In the following the setting operation, fixation when disassembled and the disassembly / assembly will be described in further details.

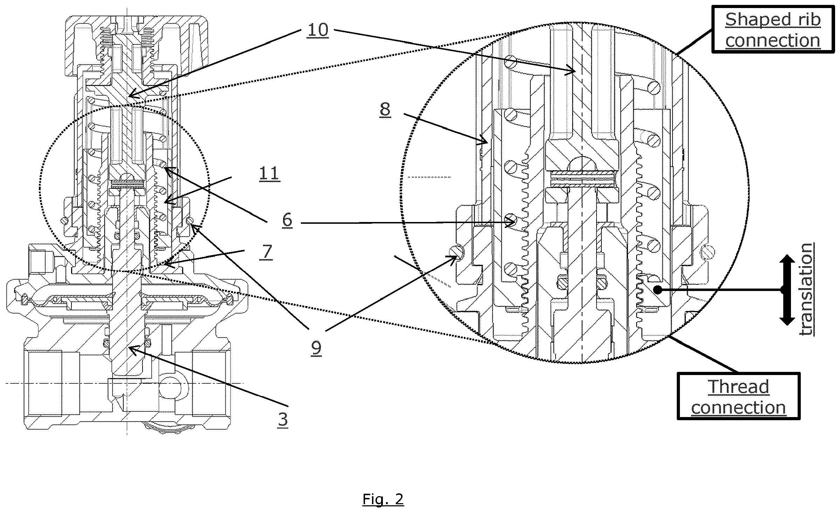

The change of setting as illustrated in fig. 2 thus is done by rotating the setting housing (8) relative to the spring housing (7) fixed to the valve housing (1) thus inducing the spring elevator (11) to rotate due to their interconnection. Through the winded interconnection of the spring elevator (11) to the spring housing (7) the spring elevator (11) is translocated up or down changing the tension on the spring (6) and thus the biasing on the membrane (4) and thereby the pressure setting, this is illustrated in fig. 2 where the bottom of the spring elevator (11) has been lifted relative to the spring housing (7) relative to the position of fig. 1, this reducing the distance from the bottom position to the spring guide (10) defining the uppermost position of the spring (6) in the same manner as the bottom position in the illustrated embodiment, the bottom part of the spring elevator (11), defines its lowermost position, the distance between these thus defining the tension of the spring and thus giving its biasing to spindle (5) translating the biasing to the membrane (4) through the valve cone (3).

In one embodiment a blocking mechanism is positioned to prevent rotation of the setting housing (8) relative to spring housing (7) in a locking position and enabling it in an unlocking position. A locking mechanism may be introduced preventing movement of the blocking mechanism in changing from locking position to unlocking position. In another embodiment the setting housing (8) operate relative to the spring housing (7) through some resilience or friction such that they the setting is done only through some force, and where this force is sufficient to retain the relative positions even when the regulation part (61) is detached from the valve part (60) and attached again. This enables all the settings to be maintained during disassembly of the valve when removing the regulation part (61) from the valve part (60) as the biasing of the spring (6) is not affected.

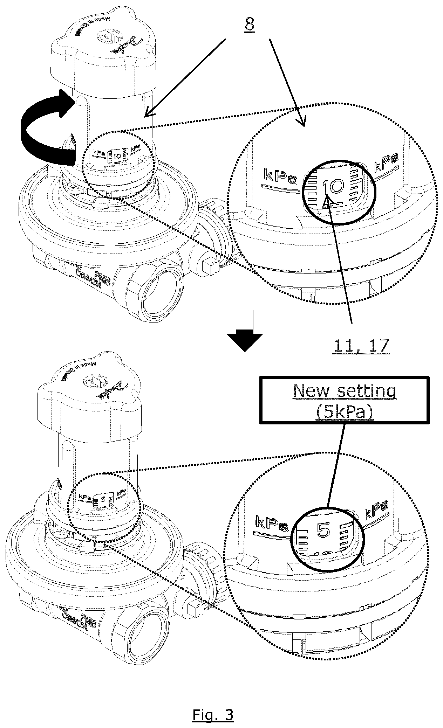

The valve according an embodiment comprises a scale setting markers (17) at the setting housing (8) (illustrated in fig 3) visualizing the actual setting of the system, being the tension of the spring (6) that again is directly linked with the pressure setting, where the visualization may be related to how deep the spring elevator (11) is positioned within the spring housing (7).

As also described above when assembled the spindle (5) reaching out of the valve housing (1) reaches into an inner bore of the inside spring housing part (7a) where it is fixed to the spring guide (10) in any manner where they may be attached and detached relative to each other, such as, but not limited to, through a pin (20) and groove (21) connection. In the illustrations this is formed by the pin (21) as a part of the spindle (5) that at an assembling position, a given angular position of the regulation part (61) relative to the valve part (60), fits into an opening of the groove (21) in the lower end of the spring guide (10)."When rotated to the operational position, the angular position of the regulation part (61) relative to the valve part (60) where they are fixed together for operation of the valve, the pin (20) is rotated into a hollow of the groove (20) where it is fixed from any movement in the up and down direction of spindle (5) relative to the spring guide (10).

When in assembling position the regulation part (61) operationally is fixed to the valve part (60) and held together in any commonly known manner. In the illustrated embodiment this is done by a protrusion (40) partly encircling the lower part of the spring housing (7) fitting into a correspondingly shaped groove (41) formed in the upper part of the valve housing, thus preventing them from being removed from each other. When rotating the unless rotated regulation part (61) relative to the valve part (60) to the assembling position, just as the pin (20) aligns with the opening of the groove (21) the protrusion will be aligned with a position where no obstructions are formed in the valve housing (1) preventing it from being removed from the valve part (60).

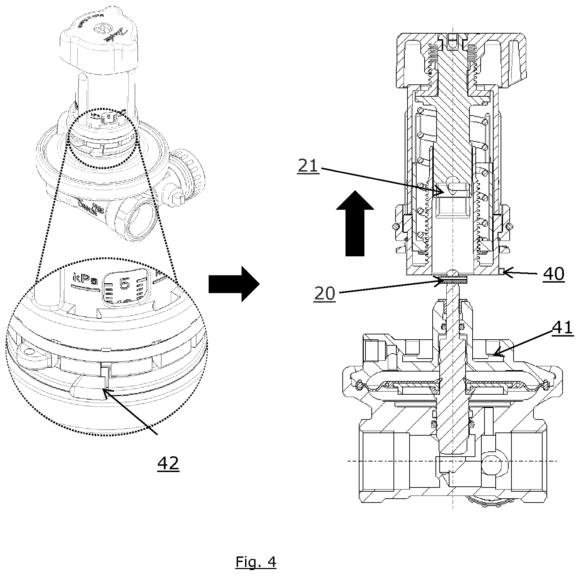

A locking mechanism (42) as illustrated in fig. 4 fixes the regulation part (61) in the operational position connection to the valve part (60) until unlocked.

This could be an ordinary snap device (42) preventing the rotation of the parts from the operational position to the assembly position, where this could be released by pulling up the snap releasing the parts to rotate relative to each other. In the same manner, when assembled the snap device automatically would enter the locking position. A person skilled in the art would fully know how to construct this.

In the following some further features of the valve will be described, the shut-off function and the flushing function.

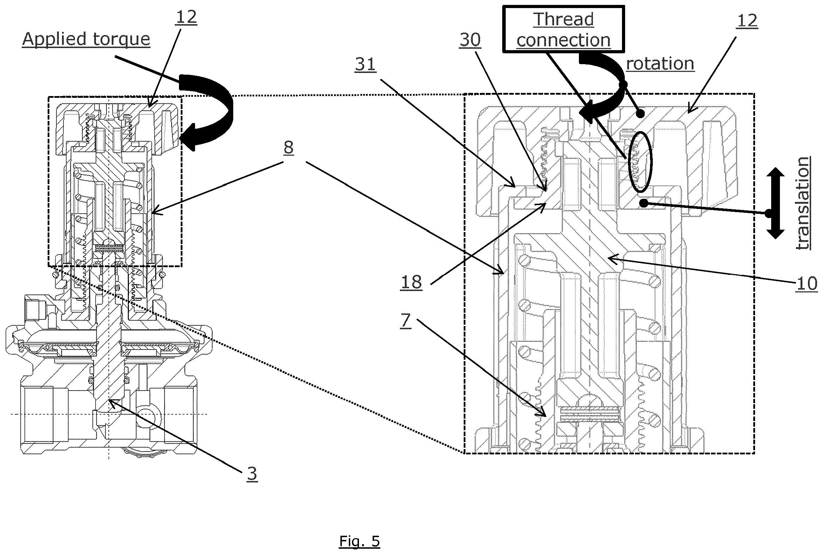

A shut-off knob (12) is attached to the spring guide (10) where fig. 5 illustrates its function to shut off the flow through the valve.

The shut-off knob (12) is connected to the shut-off elevator (18) such that a rotation of the shut-off knob (12) translocate the shut-off elevator (18) in an up and down direction, until it reach a position where the rotation will force the shut-off knob (12) downwards, or alternatively the rotation forces shut-off knob (12) downwards simultaneously to the upwards moving shut-off elevator (18). The shut-off knob (12) has an upper connection (30) to the spring guide (10), such as a surface abutting against an upper surface of the spring guide (10). When the shout-off elevator (18) reaches a setting house edge (31) it is prevented from further upwards translocation, leaving only the shut-off knob (12) to be translocated downwards and by the upper connection (30) forcing the connected spring guide (10), spindle (5) and valve cone (3) downwards too until the valve cone (3) connects to the valve seat (2) to close off any flow through the valve. The system is formed such that only a rotation of the shut-off knob (12) in the opposite direction may move the valve cone (3) from the valve seat (2) thus effectively fixed against the valve seat (2) unaffected by the forces acting on the opposing sides of the membrane (4) until it by a counter rotation re-translocate the system back to operational position.

In the illustrated embodiment, to shut off the valve the knob (12) is equipped with internal windings adapted to match external windings at the shut-off elevator (18) partly positioned within setting housing (8) and in connection to the spring guide (10) in a manner preventing them from rotating relative to each other, such as by mating shape of the bore of the shut-off elevator (18) to that of this upper section of the spring guide (10), e.g. hexagonal shapes. It is essential they are not fixed relative to each other, but that the spring guide (10) are free to slide up and down within the bore of the shut-off elevator (18), both when to shut-off the valve as will be describe later.

Unlike during shut-off, then during ordinary pressure regulation operation of the valve, when the shut-off function is disengaged, the shut-off elevator (18) lowest surface always rests on the upper surface of the spring guide (10) to ensure a free movement of the connected spring guide (10), spindle (5) and valve cone (3) within the setting housing (8) and consequently within the regulation part (61).

The spring guide (10) further is prevented from rotation relative to the spring housing (7) by any means, such as by shape (e.g. hexagonal or having protrusions of at respectively the inside and outside surfaces of the parts (7, 10) interconnecting each other, or protrusions of the one of the parts (7, 10) fitting within grooves of the other.). Since the spring guide (10) in this manner is prevented from rotation relative to the spring housing (7) being fixed to the valve housing (1), and the shut-off elevator (18) is prevented from rotation relative to the spring guide (10), then a rotation of the shut-off knob (12) only leaves the shut-off elevator (18) to an up and down translocation, thus forming the operation as described above. The windings will ensure a fixed engagement of the valve cone (3) to the valve seat (2) until the shut-off knob (12) is re-winded.

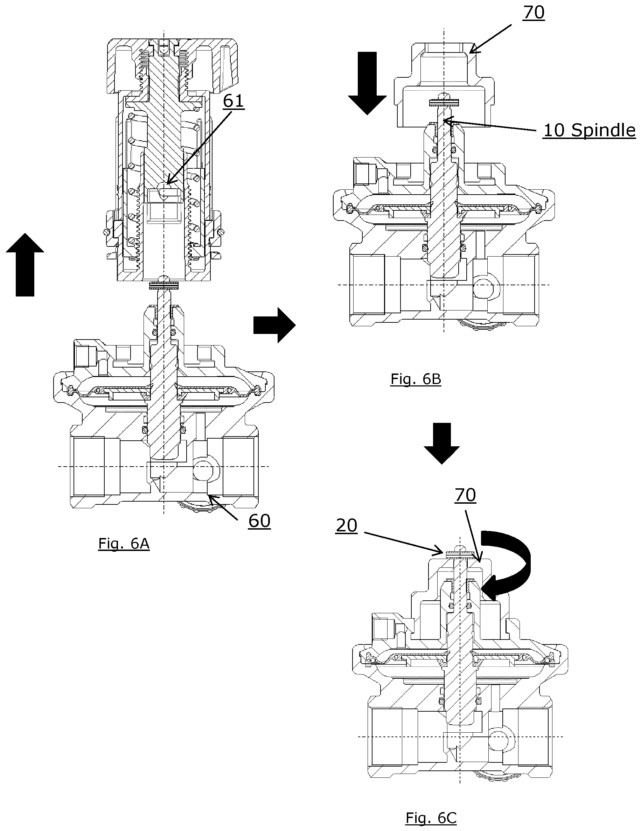

Figs. 6A-C shows another possible feature of a further embodiment of the present invention, where a flush feature is enabled through an accessory device where the valve is forced in the open position. This is especially relevant during filling or flushing of the system where to the valve is attached, such as pipes, radiators etc. In the illustrated embodiment of Fig. 5A a flushing accessory (70) is needed being attached to the valve after regulation part (61) has been removed where the accessory (70) is respective attached and detached in a manner similar to the regulation part (61) and hence comprises similar features. The accessory (70) comprises means to fixate the spindle (10) in an open position, such as in the illustrated embodiment where a top opening in the accessory (70) is adapted to receive the pin (20) when in assembly position, whereas when rotated to operational position the pin (20) rests on the upper surface of the accessory (70) preventing the spindle (10) from any downwards movement. In one not illustrated embodiment some rotation of part of the accessory (70) forces its top surface, and thus the spindle (10) upwards to the open position.

## Claims

1. A valve with
- a valve part (60) comprising; a valve housing (1) with a flow communication from a flow inlet to a flow outlet and a valve seat (2) positioned within said flow communication, a valve cone (3) adapted to change position to change the valve opening defined as the opening between the valve seat (2) and valve cone (3), a membrane (4) adapted to deflect under the influence of a differential pressure across said membrane (4) and means (62, 63) to communicate pressures to the opposing sides of the membrane (4),
- a regulation part (61) comprising a biasing member (6), a setting housing (8), and a spring housing (7) being the fixed part to the valve housing (1),
where the valve part (60) and the regulation part (61) are sealed and detachable from each other, but where said regulation part (61) is attached to said valve part (60) during operation of the valve, wherein
a spring elevator (11) is positioned in interconnection to the setting housing (8) and spring housing (7) such that a rotation of the setting housing (8) induces a rotation of the spring elevator (11) but leaves it free to translocate up and down, where the setting is changed by rotating the setting housing (8) relative to the spring housing (7) and valve housing (1) to translocate the spring elevator (11) changing the tension of said biasing member (6),
**characterized in that**
there is a winded interconnection of the spring elevator (11) to the spring housing (7).

2. Valve according to claim 1, where the bottom of the spring elevator (11) defines the lowermost position of biasing member (6) and a spring guide (10) defines the uppermost position of the spring (6).

3. Valve according to claim 2, where the distance between the spring guide (10) and the bottom of the spring elevator (11) defines the tension of the biasing member (6).

4. Valve according to any of the preceding claims, a part of the biasing member (6) is enclosed and in connection to a bottom position of the spring elevator (11).

5. Valve according to claim 4, where the spring housing (7) formed such that an outside spring housing part (7a) of it encloses part of the spring elevator (11) and thus biasing member (6) and an inside spring housing part (7b) of are being enclosed by the spring elevator (11) and thus part of the spring (6).

6. Valve according to claim 5, where an endsurface of the outside spring housing part (7b) abuts against an end surface of a setting housing (8) partly enclosing the spring (6), the inside spring housing part (7a) and the spring elevator (11).

7. A valve according to any of claims 1-6,
wherein said valve further comprises a spindle (5) having a part within the regulation part (61) and a part within the valve part (60) and is connected to said valve cone (3),

8. Valve according to any of the preceding claims, wherein the settings of the regulation part (61) are maintained when the valve part (60) and the regulation part (61) is detached from each other by a blocking mechanism positioned to prevent rotation of the setting housing (8) relative to spring housing (7) in a locking position and enabling it in an unlocking position, or where the setting housing (8) operate relative to the spring housing (7) through some resilience or friction such that they the setting is done only through some force, and where this force is sufficient to retain the relative positions even when the regulation part (61) is detached from the valve part (60) and attached again

9. Valve according to claim 8, wherein rotation of the setting (8) relative to setting housing (7) is prevented during dismounting through a resilience or friction in moving the one relative to the other.

10. Valve according to claim 9, wherein a blocking mechanism is positioned to prevent rotation of the setting (8) relative to setting housing (7) in a locking position and enabling rotation in an unlocking position.

11. Valve according to any of claims 2 or 3, wherein a shut-off knob (12) is connected to the spring guide (10), where a rotation of the shut-off knob (12) induces a translocation of the spring guide (10) and thus the spindle (5) being fixed to the spring guide (10) and the valve cone (3) connected to the spindle (3) until it engages the valve seat (2) to close off flow through the valve.

## Patentansprüche

1. Ventil mit
- einem Ventilteil (60), der Folgendes umfasst: ein Ventilgehäuse (1) mit einer Strömungsverbindung von einem Strömungseinlass zu einem Strömungsauslass und einem Ventilsitz (2), positioniert in der Strömungsverbindung, einen Ventilkegel (3), angepasst zum Ändern der Position zum Ändern der Ventilöffnung, definiert als die Öffnung zwischen dem Ventilsitz (2) und dem Ventilkegel (3), eine Membran (4), angepasst zum Durchbiegen unter dem Einfluss eines Differenzdrucks über der Membran (4) und Mittel (62, 63) zum Kommunizieren von Drücken zu gegenüberliegenden Seiten der Membran (4),
- einen Regelteil (61), umfassend ein Vorspannelement (6) , ein Stellgehäuse (8) und ein Federgehäuse (7), das der fixierte Teil am Ventilgehäuse (1) ist,
wobei der Ventilteil (60) und der Regelteil (61) abgedichtet und voneinander lösbar sind, wobei aber der Regelteil (61) während Betriebs des Ventils am Ventilteil (60) befestigt ist,
wobei ein Federelevator (11) in der Zwischenverbindung zwischen dem Stellgehäuse (8) und dem Federgehäuse (7) positioniert ist, sodass eine Drehung des Stellgehäuses (8) eine Drehung des Federelevators (11) induziert, diesen aber frei lässt, um sich nach oben und unten zu verlagern, wobei die Einstellung geändert wird durch Drehen des Stellgehäuses (8) relativ zum Federgehäuse (7) und Ventilgehäuse (1) zum Verlagern des Federelevators (11), dadurch die Spannung des Vorspannelements (6) ändernd,
**dadurch gekennzeichnet, dass** es eine gewindete Zwischenverbindung zwischen dem Federelevator (11) und dem Federgehäuse (7) gibt.

2. Ventil nach Anspruch 1, wobei der Boden des Federelevators (11) die unterste Position des Vorspannelements (6) definiert und eine Federführung (10) die oberste Position der Feder (6) definiert.

3. Ventil nach Anspruch 2, wobei der Abstand zwischen der Federführung (10) und dem Boden des Federelevators (11) die Spannung des Vorspannelements (6) definiert.

4. Ventil nach einem der vorhergehenden Ansprüche, wobei ein Teil des Vorspannelements (6) eingeschlossen und in Verbindung mit einer unteren Position des Federelevators (11) ist.

5. Ventil nach Anspruch 4, wobei das Federgehäuse (7) so gebildet ist, dass ein äußerer Federgehäuseteil (7a) davon einen Teil des Federelevators (11) einschließt, sodass das Vorspannelement (6) und ein innerer Federgehäuseteil (7b) davon durch den Federelevator (11) und damit einen Teil der Feder (6) eingeschlossen sind.

6. Ventil nach Anspruch 5, wobei eine Endoberfläche des äußeren Federgehäuseteils (7b) an einer Endoberfläche eines Stellgehäuses (8) anliegt, das teilweise die Feder (6), den inneren Federgehäuseteil (7a) und den Federelevator (11) einschließt.

7. Ventil nach einem der Ansprüche 1-6, wobei das Ventil ferner eine Spindel (5) umfasst, die einen Teil innerhalb des Regelteils (61) und einen Teil innerhalb des Ventilteils (60) aufweist und mit dem Ventilkegel (3) verbunden ist.

8. Ventil nach einem der vorhergehenden Ansprüche, wobei die Einstellungen des Regelteils (61) erhalten werden, wenn der Ventilteil (60) und der Regelteil (61) voneinander gelöst werden durch einen Blockiermechanismus, der positioniert ist, um Drehung des Stellgehäuses (8) relativ zum Federgehäuse (7) in einer Sperrposition zu verhindern und in einer Entsperrposition zu ermöglichen, oder wobei das Stellgehäuse (8) relativ zum Federgehäuse (7) über einen gewissen Widerstand oder Reibung operiert, sodass die Einstellung nur durch etwas Kraft vorgenommen wird, und wobei diese Kraft ausreichend ist, um die relativen Positionen zu halten, selbst wenn der Regelteil (61) vom Ventilteil (60) gelöst und wieder befestigt wird.

9. Ventil nach Anspruch 8, wobei Drehung der Einstellung (8) relativ zum Stellgehäuse (7) während der Demontage verhindert wird durch einen Widerstand oder Reibung beim Bewegen des einen relativ zum anderen.

10. Ventil nach Anspruch 9, wobei ein Blockiermechanismus positioniert ist, um Drehung der Einstellung (8) relativ zum Stellgehäuse (7) in einer Sperrposition zu verhindern und in einer Entsperrposition zu ermöglichen.

11. Ventil nach einem der Ansprüche 2 oder 3, wobei ein Absperrknopf (12) mit der Federführung (10) verbunden ist, wobei eine Drehung des Absperrknopfs (12) eine Verlagerung der Federführung (10) und damit der an der Federführung (10) befestigten Spindel (5) und des mit der Spindel (3) verbundenen Ventilkegels (3) induziert, bis sie in Eingriff mit dem Ventilsitz (2) kommt, um Strömung durch das Ventil zu abzuriegeln.

## Revendications

1. Soupape avec
une partie de soupape (60) comprenant : un logement de soupape (1) avec une communication d'écoulement d'une entrée d'écoulement à une sortie d'écoulement et un siège de soupape (2) positionné à l'intérieur de ladite communication d'écoulement, un cône de soupape (3) conçu pour changer de position afin de changer l'ouverture de soupape définie comme l'ouverture entre le siège de soupape (2) et le cône de soupape (3), une membrane (4) conçue pour se déformer sous l'influence d'une pression différentielle à travers ladite membrane (4) et un moyen (62, 63) pour communiquer des pressions aux côtés opposés de la membrane (4),
une partie de régulation (61) comprenant un élément de sollicitation (6), un logement de réglage (8), et un logement de ressort (7) qui est la partie fixe du logement de soupape (1),
la partie de soupape (60) et la partie de régulation (61) étant scellées et détachables l'une de l'autre, mais ladite partie de régulation (61) étant fixée à ladite partie de soupape (60) pendant le fonctionnement de la soupape,
un élévateur de ressort (11) étant positionné en interconnexion avec le logement de réglage (8) et le logement de ressort (7) de sorte qu'une rotation du logement de réglage (8) induise une rotation de l'élévateur de ressort (11) mais le laisse libre de se déplacer vers le haut et vers le bas, le réglage étant modifié en faisant tourner le logement de réglage (8) par rapport au logement de ressort (7) et au logement de soupape (1) pour déplacer l'élévateur de ressort (11) en modifiant la tension dudit élément de sollicitation (6),
**caractérisé en ce qu'**il y a une interconnexion enroulée de l'élévateur de ressort (11) au logement de ressort (7).

2. Soupape selon la revendication 1, la partie inférieure de l'élévateur de ressort (11) définissant la position la plus basse de l'élément de sollicitation (6) et un guide de ressort (10) définissant la position la plus haute du ressort (6).

3. Soupape selon la revendication 2, la distance entre le guide de ressort (10) et la partie inférieure de l'élévateur de ressort (11) définissant la tension de l'élément de sollicitation (6).

4. Soupape selon l'une quelconque des revendications précédentes, une partie de l'élément de sollicitation (6) étant enfermée et en liaison avec une position inférieure de l'élévateur de ressort (11).

5. Soupape selon la revendication 4, le logement de ressort (7) étant formé de sorte qu'une partie extérieure de logement de ressort (7a) de celui-ci enferme une partie de l'élévateur de ressort (11) et donc l'élément de sollicitation (6) et une partie intérieure de logement de ressort (7b) de celui-ci étant enfermés par l'élévateur de ressort (11) et donc une partie du ressort (6) .

6. Soupape selon la revendication 5, une surface d'extrémité de la partie extérieure de logement de ressort (7b) venant en butée contre une surface d'extrémité d'un logement de réglage (8) enfermant partiellement le ressort (6), la partie intérieure de logement de ressort (7a) et l'élévateur de ressort (11).

7. Soupape selon l'une quelconque des revendications 1 à 6, ladite soupape comprenant en outre une broche (5) ayant une partie à l'intérieur de la partie de régulation (61) et une partie à l'intérieur de la partie de soupape (60) et étant reliée audit cône de soupape (3).

8. Soupape selon l'une quelconque des revendications précédentes, les réglages de la partie de régulation (61) étant maintenus lorsque la partie de soupape (60) et la partie de régulation (61) sont détachées l'une de l'autre par un mécanisme de blocage positionné pour empêcher la rotation du logement de réglage (8) par rapport au logement de ressort (7) dans une position de verrouillage et la permettre dans une position de déverrouillage, ou lorsque le boîtier de réglage (8) fonctionne par rapport au boîtier de ressort (7) grâce à une certaine résilience ou friction, de sorte que le réglage ne se fasse que par l'intermédiaire d'une certaine force, et lorsque cette force est suffisante pour conserver les positions relatives même lorsque la partie de régulation (61) est détachée de la partie de soupape (60) et fixée à nouveau.

9. Soupape selon la revendication 8, la rotation du réglage (8) par rapport au boîtier de réglage (7) étant empêchée pendant le démontage par une élasticité ou un frottement lors du déplacement de l'un par rapport à l'autre.

10. Soupape selon la revendication 9, un mécanisme de blocage étant positionné pour empêcher la rotation du réglage (8) par rapport au boîtier de réglage (7) dans une position de verrouillage et permettre la rotation dans une position de déverrouillage.

11. Soupape selon l'une quelconque des revendications 2 ou 3, un bouton d'arrêt (12) étant relié au guide de ressort (10), une rotation du bouton d'arrêt (12) induisant un déplacement du guide de ressort (10) et donc de la broche (5) est fixée au guide de ressort (10) et du cône de soupape (3) relié à la broche (3) jusqu'à ce qu'il vienne en prise dans le siège de soupape (2) pour fermer l'écoulement à travers la soupape.
